# EUROPEAN PATENT SPECIFICATION

(11) **EP 4 265 846 B1**
(45) Date of publication and mention of the grant of the patent: **21.10.2026**
(21) Application number: 21906262.7
(22) Date of filing: 19.11.2021
(51) Int. Cl.: E02B 17/00, E02D 27/06, B63B 35/44, F16B 5/02

(54) **FLOATING BODY STRUCTURE**
SCHWIMMENDE STRUKTUR
STRUCTURE DE CORPS FLOTTANT

(30) Priority: 18.12.2020 JP 2020210547
(43) Date of publication of application: 25.10.2023
(73) Proprietor: Shimizu Corporation, Chuo-ku Tokyo 104-8370 (JP)
(72) Inventor: TAOKA, Hiroko, Tokyo 104-8370 (JP); YOSHIDA, Ikuo, Tokyo 104-8370 (JP); TAKAHASHI, Akane, Tokyo 104-8370 (JP); OHBA, Naoki, Tokyo 104-8370 (JP); NAKASHIMA, Hidemi, Tokyo 104-8370 (JP); KANEMITSU, Tomomi, Tokyo 104-8370 (JP); KOBAYASHI, Shinji, Tokyo 104-8370 (JP)
(74) Representative: dompatent
(86) International application number: PCT/JP2021/042619
(87) International publication number: WO 2022/130899

(56) References cited:
- JP-A- 2007 192 007
- JP-A- 2015 151 684
- JP-A- H09 100 540
- US-A1- 2016 332 705

## Description

### [Technical Field]

The present invention relates to a floating body structure. Priority is claimed on Japanese Patent Application No. 2020-210547, filed on December 18, 2020.

### [Background Art]

In the related art, as shown in Patent Document 1, for example, a technique for installing a building on top of a floating artificial ground has been proposed.

Patent Document 1 discloses a floating body type ground provided with a floating body constituting a dock consisting of a wall surface and a horizontal bottom surface, and a plurality of precast concrete floating block arranged on the bottom surface of the dock with a gap with respect to the wall surfaces of the dock.

### [Citation List]

### [Patent Document]

[Patent Document 1] Japanese Unexamined Patent Application, First Publication No. 2015-151684

US 2016/332705 A1 discloses a floating island intended for the arrangement of various objects, in particular, civil engineering, for residential, scientific, production, cultural entertainment and recreational purposes.

### [Summary of Invention]

The subject matter of the invention is defined by independent claim 1. The dependent claims define preferred embodiments of the invention

### [Technical Problem]

The conventional floating body type artificial ground described in Patent Document 1 has the following problems.

The floating body type artificial ground disclosed in Patent Document 1 includes a floating body consisting of a plurality of floating blocks. The floating body is designed in accordance with at least one of the weight of the individual superstructures, the load balance between the superstructures, and the arrangement of the individual superstructures. Each superstructure provided on the upper part of the floating body type artificial ground is fixed to the floating body. For this reason, when changing or moving the upper structure of the floating body type artificial ground, it is necessary to connect and fix the frugality of the floating blocks provided on the floating body, therefore, the entire float body must be newly designed, or need to build.

The present invention has been made in view of the above problems, and provides a floating body structure capable of increasing the degree of freedom in constructing an upper structure supported from lower side by a floating body without newly designing or constructing the floating body.

### [Solution to Problem]

A floating body structure according to the present invention includes: a floating body configured to float on or under water, and supporting an upper structure from a lower side, the upper part structure being constructed on the floating body; a load distribution band integrally provided on the floating body, and arranged in a grating wall like form; an anchor block provided in an opening region so as to be detachable and attachable in a state of restricting a movement upward, and in which an anchor reinforcement bar is arranged on an upper end of the anchor block; and a plurality of support columns installed on an intersection point of a grating of the load distribution band, and configured to form a flexible pit on an upper layer of the load distribution band. A foundation of the upper structure is installed on the load distribution band, and only the anchor reinforcement bar is integrated and fixed to the foundation with a stably fixation length in which the anchor reinforcement bar obtains predetermined strength.

In the floating body structure according to the present invention, since the load distribution bands are arranged in the grating wall like form, the weight of the upper structure in capable of being distributed to the floating body. The floating body structure easily transmits the load of the upper structure to the partition wall inside the floating body via the load distribution bands.

In the floating body structure, the anchor block is provided in a state that only the anchor reinforcement bar is integrated and fixed to the foundation and the anchor block is restricted to move upward. The foundation of the upper structure is contacts with the upper end of the load distribution band. Accordingly, in the floating body structure, the anchor blocks are capable of resisting the pull-out force due to an overturning of the upper structure. Thereby, the floating body structure is capable of preventing the upper structure from overturning.

In the floating body structure according to the present invention, the anchor blocks are capable of being provided in the load distribution bands, which are arranged in the grating like form, in a state that the anchor blocks are easily detachable and attachable at the optional position without disassembling the load distribution bands. Accordingly, when changing or moving the upper structure in the floating body structure, it is not necessary to design and construct new floating body. The floating structure is capable of increasing the degree of freedom in constructing the upper structure supported by the floating body from below.

In the floating body structure according to the present invention, a protrusion expanded in a width direction may be formed on a wall upper portion of the load distribution band, and a locking portion which is locked with an under surface of the protrusion may be formed in the anchor block.

In the floating body structure according to the present invention, the engagement portion of the anchor block contacts with the lower surface of the projection of the load distribution bands, thereby reliably resisting the overturning pull-out force of the upper structure. Therefore, the floating body structure is more reliably prevent the overturning of the upper structure.

The floating body structure according to the present invention may include a cover body closing an upper portion of the opening region surrounded by the load distribution band.

In the floating body structure according to the present invention, the foundation of the upper structure and the anchor blocks are connected only by the anchor reinforcing bars by closing the opening area of the load distribution bands with the cover body. Therefore, the anchor blocks provided in the opening area and the foundation of the upper structure are installed in a state of being separated with each other via the cover body.

In the floating body structure according to the present invention, when the upper structure and the foundation of the upper structure are newly constructed, it can be constructed simply by replacing only the cover body and the anchor blocks, and the floating body and the load distribution bands can be used continuously.

In the floating body structure according to the present invention, since the opening area is closed by the cover body, the foothold is capable of being secured by the cover body during maintenance of the flexible pit or the like.

In the floating body structure according to the present invention, a ballast for weight adjustment may be installed in the flexible pit.

In the floating body structure according to the present invention, the ballast is capable of being arranged in the flexible pit such that the weight and installation position of the ballast are adjusted to become an optimally balanced with respect to the arrangement and weight of the upper structure to be constructed on the floating body structure. The ballast is capable of stabilizing the attitude of the floating body structure by adjusting the inclination of the floating body structure caused by the upper structure.

The floating body structure according to the present invention is capable of increasing the degree of freedom in constructing the upper structure supported by the floating body from below, and static stability and stability is capable of being maintained with respect to the change of at least one of the weight of each upper structure, the load balance between the upper structures, and the arrangement of the individual upper structures.

In the floating body structure according to the present invention, an equipment having an infrastructure function in the upper structure may be installed in the flexible pit.

In the floating body structure according to the present invention, facilities having infrastructure functions in the upper structure are efficiently arranged by using the flexible pit in which the foundation of the upper structure is installed.

In the floating body structure according to the present invention, an artificial ground closing an upper part of the flexible pit may be provided on an upper end of the plurality of support columns.

The floating body structure of the present invention is capable of forming the flexible pit between the load distribution band and the artificial ground.

The artificial ground is fixed to support columns provided on the load distribution band. Ballast for adjusting the weight of the floating body structure is optionally installed in the flexible pit. Accordingly, the floating body structure is capable of maintaining static stability and stability of whole of the floating body structure with respect to the change of at least one of the weight of the individual upper structure, the load balance between the upper structures, and the arrangement of the individual upper structures without disassembling the load distribution bands.

### [Advantageous Effects of Invention]

According to the floating body structure of the present invention, it is possible to increase the degree of freedom in constructing the superstructure supported from lower side by the floating body without newly designing or constructing the floating body.

### [Brief Description of Drawings]

FIG.1 is a perspective view showing the overall configuration of a floating body type block using a floating body structure according to an embodiment of the present invention.
FIG. 2 is a side view showing the whole of the floating body structure.
FIG. 3 is an enlarged view of a main part of the floating body structure shown in FIG. 2.
FIG. 4 is a partial perspective view showing the configuration above the load distribution band of the floating body structure.
FIG. 5 is a partially cutaway perspective view showing an installed state of a load distribution band and the anchor blocks.
FIG. 6 is a perspective view of the anchor block.
FIG. 7 is a plan view showing a construction state of the anchor block viewed from above.
FIG. 8 is a plan view showing an installation state of the anchor block viewed from above.
FIG. 9 is a perspective view showing a construction state that the support column and the cover body are installed on the load distribution band.
FIG. 10 is a perspective view showing a construction state that the foundation is provided on the anchor block subsequently to FIG.9.
FIG. 11 is a perspective view showing a construction state that the artificial ground is installed on the support column subsequently to FIG.10.
FIG. 12 is a perspective view showing an example of an arrangement state of the ballast.
FIG. 13 is a perspective view showing another example of the arrangement state of the ballast.

### [Description of Embodiments]

Hereinafter, a floating body structure according to an embodiment of the present invention will be described with reference to the drawings.

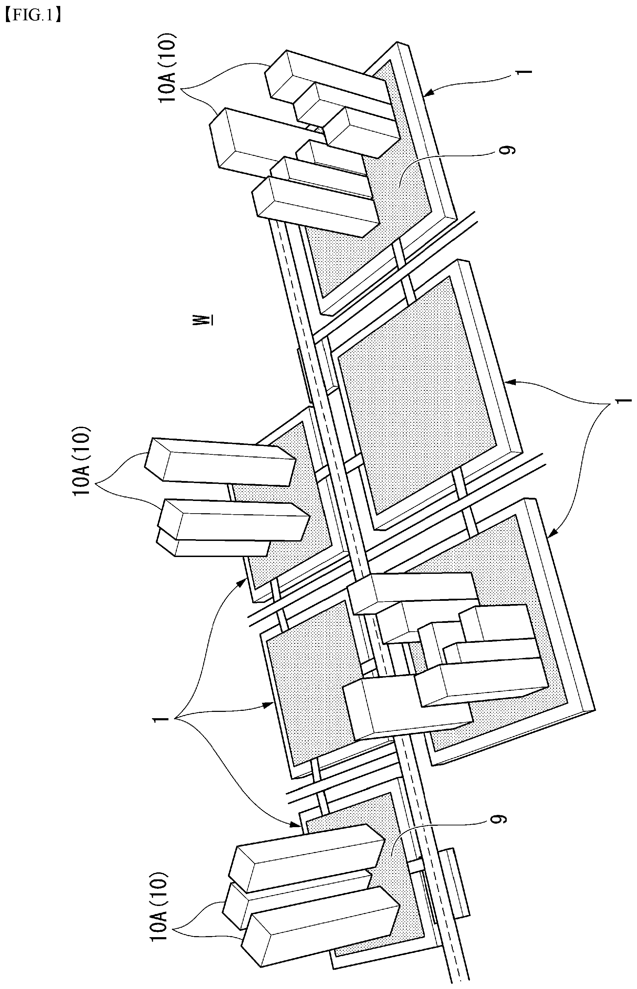

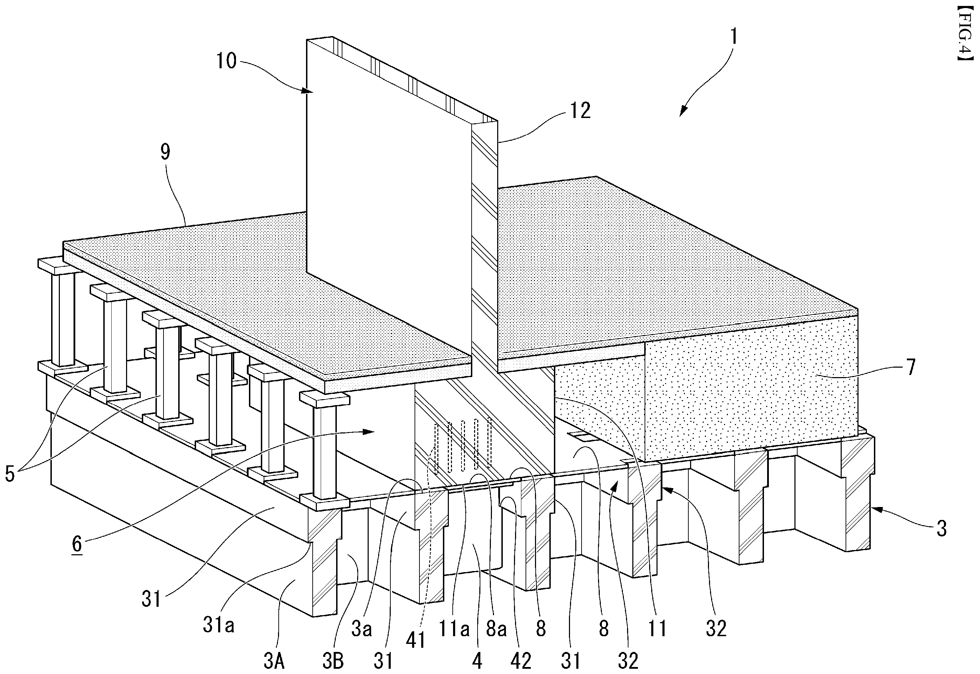

As shown in FIG. 1, the floating body structure 1 according to the embodiment is provided on the sea surface W, and a foundation 11 (see FIG. 4) of an upper structure 10 is fixed to an upper portion thereof.

FIG. 1 shows an example of a floating body type block in which a plurality of floating body structures 1 (six structures in FIG. 1) are floated on the sea with intervals. Arbitrary quantities of buildings 10A having arbitrary heights, which are the upper structures 10, are arbitrarily arranged and constructed on the upper portion of each floating body structure 1. In the floating body type block of this embodiment, a floating body structure 1 without an upper structure 10 is also provided as a park (open space).

The foundation 11 of the upper structure 10 of the embodiment is made of reinforced concrete and has a structure integrally formed with a columnar body 12 provided upward (see FIG. 4).

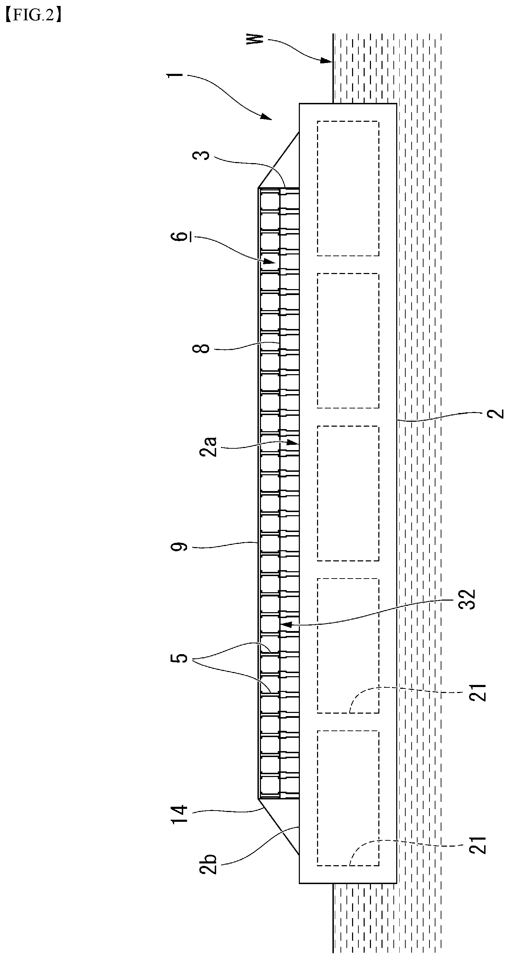

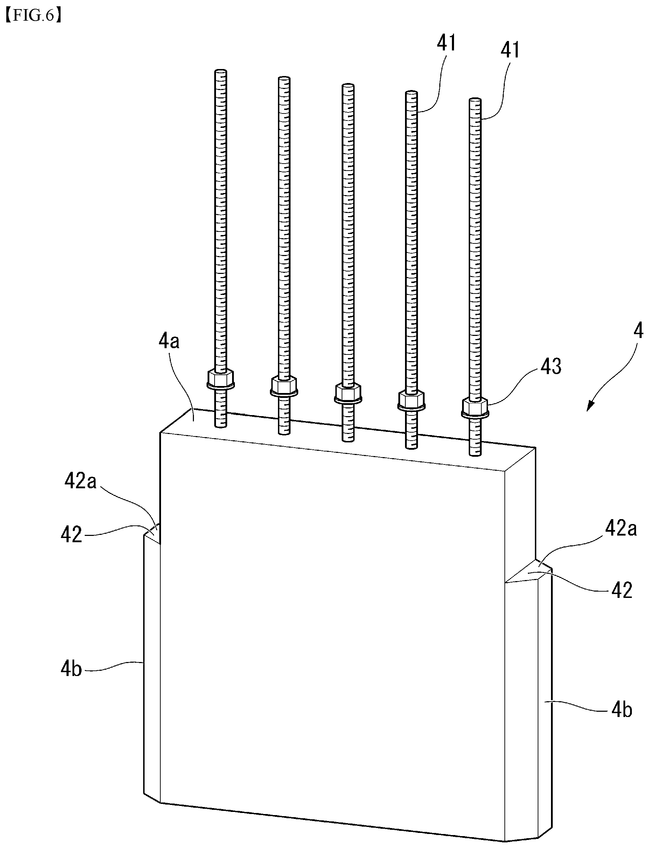

As shown in FIGS. 2 to 4, the floating body structure 1 includes a floating body 2, a load distribution band 3, anchor blocks 4, and a plurality of support columns 5. The floating body 2 floats on the sea surface W or in the water, and supports the upper structure 10 from below. The load distribution band 3 is integrally provided on the floating body 2 and arranged like a lattice wall. The anchor block 4 is detachably provided in an opening region 32 surrounded by the load distribution band 3 and restricted from moving upward. A plurality of anchor reinforcing bars 41 (see FIG. 6) are arranged on an upper end 4a of the anchor block 4. A plurality of support columns 5 are installed on intersections of the lattice of the load distribution band 3 to form flexible pits 6 as an upper layer on the load distribution band 3.

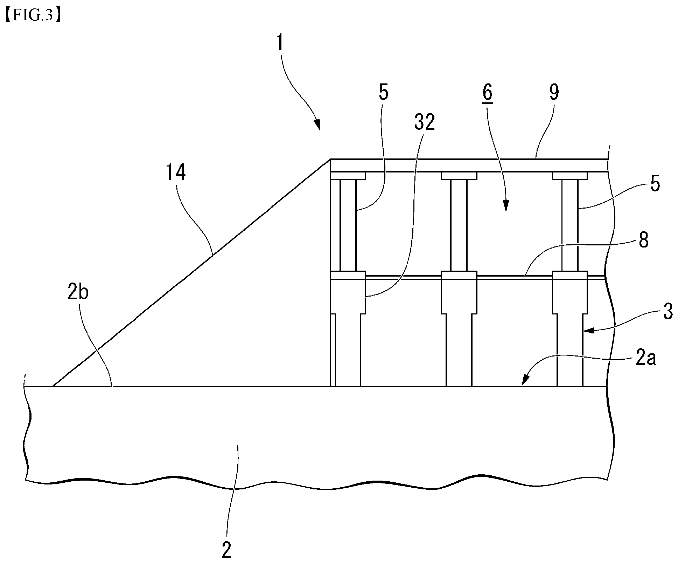

A banking 14 may be provided on an upper outer peripheral portion 2b of the floating body 2, as shown in FIGS. 2 and 3. The banking 14 is formed with an inclined slope face up to the height, for example, the combined height of the support column 5 (flexible pit 6) and the load distribution band 3 corresponding to the height of the ground (artificial ground 9 described later).

As shown in FIG. 2, the floating body 2 is a structure having a lower specific gravity than seawater and having rigidity. The floating body 2 is formed of hollow bodies in which a plurality of hollow portions 21 are arranged to space vertically and horizontally in a horizontal direction. The floating body 2 has a configuration in which the entire top, bottom, and sides are covered. The floating body 2 is formed in a plate shape that is rectangular (square in this embodiment) when viewed from above, and has a predetermined thickness. The buoyant force acting on the floating body 2 may be appropriately adjusted by a ballast 7 (see FIG. 4) or the like, which will be described later. An upper surface 2a of the floating body 2 is flat. The floating body 2 may use a highly durable precast concrete structure. As for the shape of the floating body 2 may be adopted, for example, dimensions of 180 meters long×180 meters widex14 meters high.

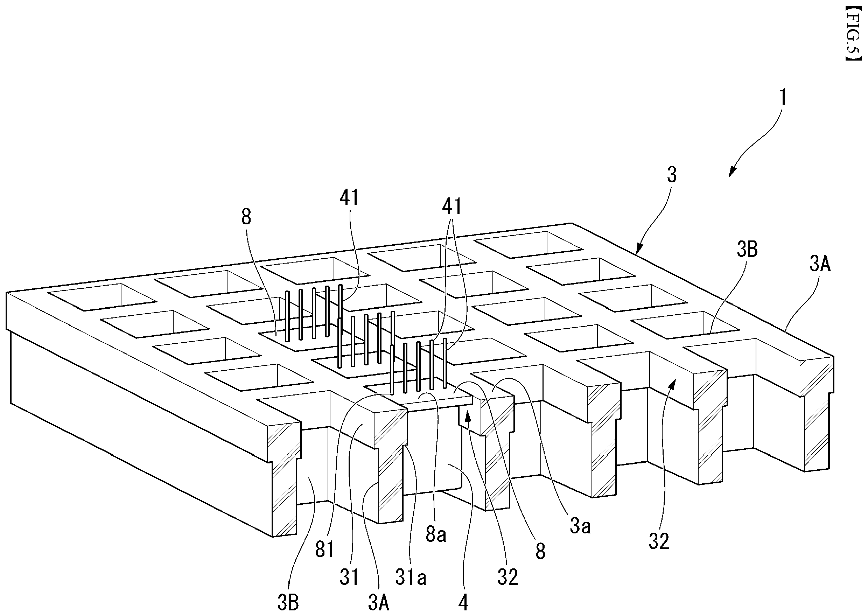

As shown in FIGS. 4 and 5, the load distribution band 3 includes a first supporting wall 3A extending vertically in a plan view and a second supporting wall 3A extending in a horizontal direction perpendicular to the first supporting wall 3A in the horizontal direction. A plurality of the first supporting walls 3A and the second supporting walls 3B walls 3B are arranged at intervals to be in a grating wall shape and provided integrally. An opening region 32 having a square shape when viewed from above and surrounded by the first supporting wall 3A and the second supporting wall 3B is formed in the load distribution band 3. Anchor blocks 4 are arranged in the opening areas 32 where the foundations 11 of the upper structure 10 are provided. The height of the load distribution band 3 is, for example, about 2 meters. An arrangement of the grating wall shape of the load distribution band 3 is formed such that the first support walls 3A adjacent in parallel in the vertical direction in plan view and the second support walls 3B adjacent in parallel in the horizontal direction are orthogonal to each other, and thereby a plurality of cubic spaces inside the load distribution band 3 are formed in the vertical direction in plan view and the horizontal direction in plan view.

The first support wall 3Ahas a T-shape in vertical cross-section along the horizontal direction in a plan view. The second support wall 3B has a T-shape in vertical cross-section along the vertical direction in a plan view. Protrusions 31 expanding in the width direction of each of the support walls 3A, and 3B are formed on a top portion of the wall of the load distribution band 3.

A locking lower surface 31a facing downward is formed on the protrusion 31. An upward locking surface 42a (see FIG. 6), that is explained later, of the anchor block 4 is locked with the locking lower surface 31a.

As shown in FIG. 6, the anchor block 4 is a block having substantially rectangular wall surfaces in side view. A plurality (five in FIG. 6) of anchor reinforcing bars 41 are embedded in the upper end 4a of the anchor block 4 along the width direction of the anchor block 4 so as to be in a state of protruding upward. In the anchor block 4 shown in FIG. 6, a fixing nut 43 is fitted to the anchor reinforcing bar 41 and fixed to the cover body 8 to be described later from above. A plurality of anchor reinforcing bars 41 are connected to foundation reinforcing bars (not shown) of the upper structure 10 and embedded in the foundation 11.

Side portions 4b on the left and right side of the anchor block 4 in the width direction have a shape that matches the side shape of the first support wall 3A and the second support wall 3B of the load distribution band 3 in a side view. As shown in FIG. 6, a step portion 42 is formed on the side portion 4b of the anchor block 4. The step portion 42 is formed with the upward locking surface 42a (locking surface) capable of coming into contact with the locking lower surface 31a of the protrusion 31 of the load distribution band 3 from below is formed on the side portion 4b of the anchor block 4. The anchor block 4 is installed in the opening region 32 of the load distribution band 3, and the upward locking surface 42a of the step portion 42 is locked by coming into contact with the locking lower surface 31a of the protrusion 31, and the anchor block 4 is restricted to move upward.

The dimension (the distance between the side portions 4b) of the anchor block 4 in the width direction matches the distance between the side surfaces 3b of the pair of opposing first support walls 3A (or the pair of second support walls 3B) of the load distribution band 3 (see FIG. 3).

If the upward engaging surface 42a is possible to be disposed directly below the engaging lower surface 31a of the protrusion 31, the anchor block 4 may be formed to have the dimension of the anchor block 4 in the width direction smaller than the distance between both side surfaces 3b of the pair of opposing first support walls 3A (or the pair of second support walls 3B) of the load distribution band 3.

As shown in FIGS. 4 and 5, the load distribution band 3 is provided with a cover body 8 closing the upper portion of the opening region 32. The cover body 8 is formed in a plate shape. The cover body 8 is arranged without a step so that the upper surface 8a and the upper end 3a of the load distribution band 3 are in same plane, and the cover body 8 is fitted into the opening region 32 without a gap. A plurality of reinforcing bar insertion holes 81 are formed in the cover body 8. The reinforcing bar insertion hole 81 penetrates through the cover body 8 in the thickness direction. The plurality of anchor reinforcing bars 41 are inserted through the plurality of reinforcing bar insertion holes 81 from below. The cover body 8 and the anchor block 4 are integrated by tightening the fixing nut 43 to the anchor reinforcing bar 41 inserted through the reinforcing bar insertion hole 81 from above.

As shown in FIG. 4, the foundation 11 of the upper structure 10 is in contact with the upper end of the load distribution band 3. The anchor block 4 is integrated with the foundation 11 of the upper structure 10 only at the anchor reinforcing bars 41.

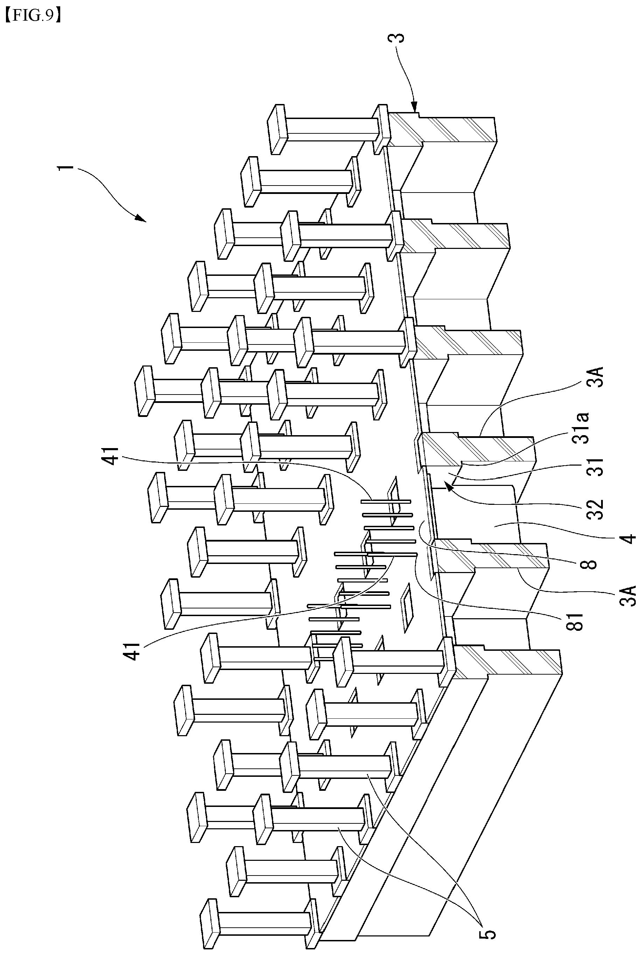

As shown in FIG. 9, the support column 5 is installed by fixing the lower end portion onto the intersection of the first support wall 3A and the second support wall 3B of the load distribution band 3. The height of the support column 5 is, for example, 2 meters.

The artificial ground 9 formed in a plate-shape is provided on the upper ends 5a of the plurality of support columns 5. The artificial ground 9 is supported from below by a plurality of support columns 5. In the floating body structure 3, flexible pits 6 are formed in a layer upside of the load distribution band 3. The flexible pit 6 is a space surrounded by the artificial ground 9 and a plurality of support columns 5. The artificial ground 9 closes the upper part of the flexible pit 6 and functions as ground with an open top.

The ballast 7 and facilities which has infrastructure functions are installed in the flexible pit 6 formed between the load distribution band 3 and the artificial ground 9. Facilities having an infrastructure function are water supply and drainage routes of the upper structure 10 or the like. The ballast 7 adjusts the weight of the floating body structure 1 as needed. The flexible pit 6 has the function of making the load distribution band 3 to support the foundation 11 of the upper structure 10 and burying the foundation 11 under the artificial ground 9. The flexible pit 6 has a function of adjusting the weight of the floating body structure 1 by arbitrarily installing the ballast 7 in the flexible pit 6. The flexible pits 6 are provided to keep the floating body structure 1 in horizontal.

The ballast 7 is provided at a predetermined position within the flexible pit 6. The ballast 7 is provided to balance the weight of the upper structure 10 acting on the floating body structure 1, and to adjust the inclination of the floating body structure 1 by the upper structure 10. The installation position and weight of the ballast 7 are set in accordance with the position and weight or the like of the upper structure 10 constructed on the floating body structure 1.

A method for constructing the floating body structure 1 described above will be specifically described with reference to the drawings. As shown in FIG. 2, the floating body 2 is installed to float on the sea surface W at a predetermined position. The load distribution band 3 which is integrally formed is installed on the floating body 2. For example, as shown in FIGS. 4 and 5, the load distribution band 3 is constructed by assembling a first support wall 3A and a second support wall 3B made of precast concrete divided into sizes that can be transported into a grating wall shape.

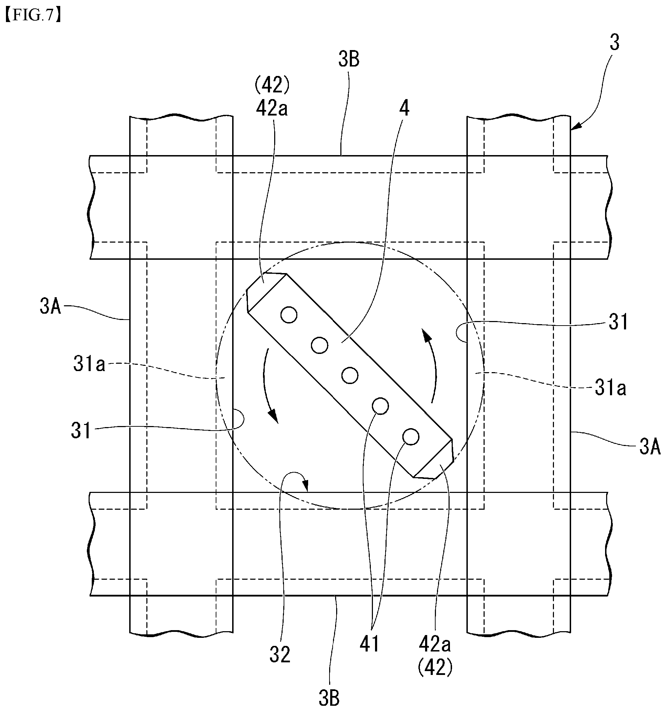

As shown in FIG. 5, the anchor blocks 4 embedded the anchor reinforcing bars 41 in advance are installed in the opening regions 32 of the load distribution bands 3 integrally formed on the floating body 2. As shown in FIG. 7, the anchor block 4 is arranged such that the width direction of the anchor block 4 faces in the diagonal direction of the opening region 32, and the anchor block 4 is lowered from above the opening region 32 while being hanging. The anchor block 4 is taken down to a position where the stepped portion 42 of the anchor block 4 is lower than the protrusion 31 of the load distribution band 3.

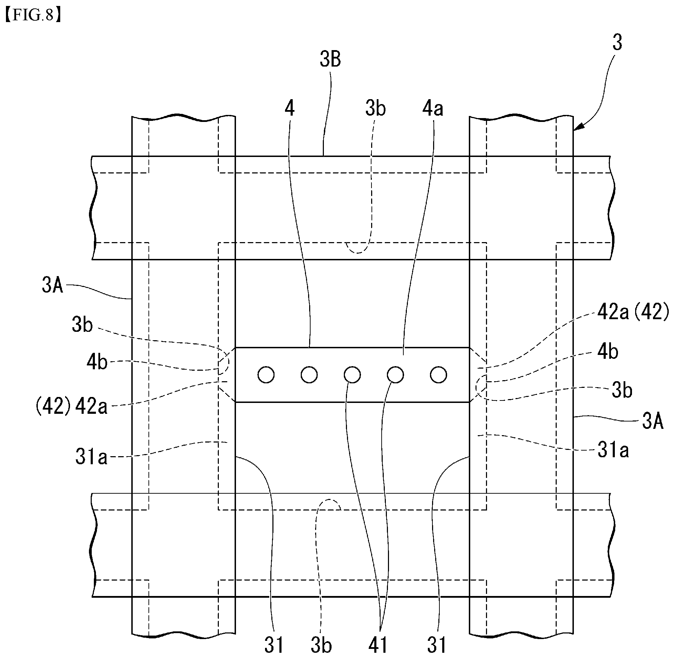

As shown in FIG. 8, the anchor block 4 is horizontally rotated about the vertical direction of the anchor block 4 as a rotation axis, and fixed to the foundation 11 inside the opening region 32 at a position where the anchor block 4 is in a predetermined posture. The anchor block 4 is fixed at a position where the main surface direction of the anchor block 4 is parallel to one of the vertical and horizontal support walls 3A and 3B of the load distribution band 3. In FIG. 8, the width direction of the anchor block 4 and the extending direction (surface direction) of the second support wall 3B are parallel. In this state, the upward locking surface 42a of the stepped portion 42 provided on the anchor block 4 is positioned below the locking lower surface 31a of the protrusion 31 of the load distribution band 3.

As shown in FIG. 9, in the opening region 32 of the load distribution band 3 at the position where the foundation 11 (see FIG. 4) of the upper structure 10 is arranged, the cover body 8 is installed on the upper portion of the anchor block 4 and closes the opening region 32. The cover body 8 inserts the anchor reinforcing bars 41 through the reinforcing bar insertion holes 81. The anchor block 4 and the cover body 8 are fixed by tightening with a fixing nut 43 (see FIG. 6) fitted to the anchor reinforcing bar 41. In the anchor block 4, the upward locking surface 42 a (see FIG. 6) of the stepped portion 42 provided on the anchor block 4 is made to be contacted with the locking lower surface 31a of the protrusion 31 of the load distribution band 3 by tightening the anchor block 4 and the cover body 8 with a fixing nut 43, thereby, the anchor block 4 becomes a state of restricting the upward movement.

As shown in FIG. 9, the support columns 5 are set up on the intersections of the first support wall 3A and the second support wall 3B of the load distribution band 3.

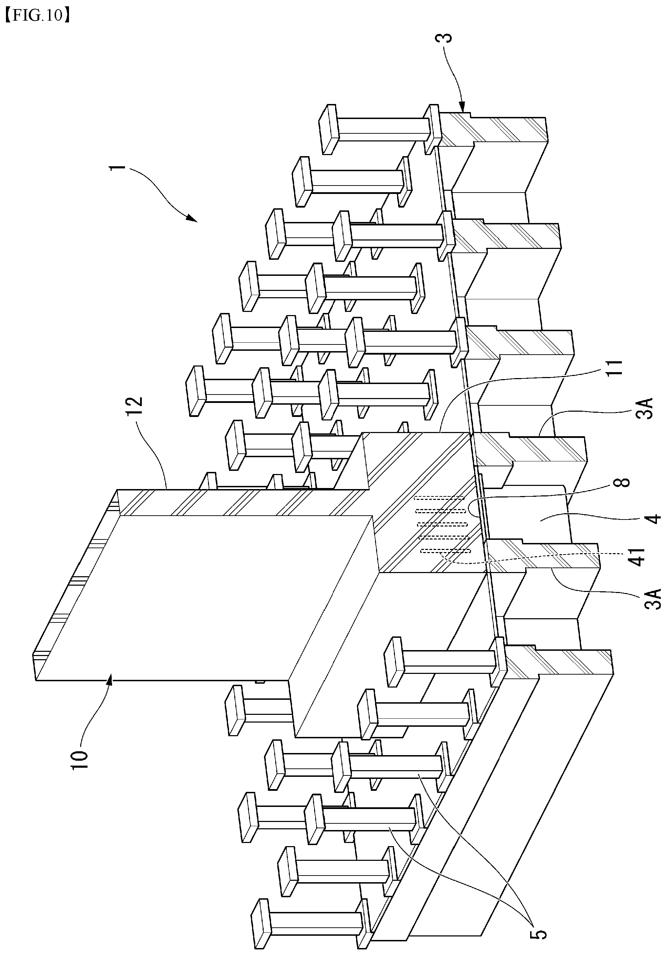

As shown in FIG. 10, the anchor reinforcing bars 41 protruding upward from the cover body 8 of the anchor blocks 4 are fixed to the foundation 11 with a fixing length obtaining a predetermined strength.

After fixing the anchor reinforcing bars 41 to the cover body 8, a formwork is placed on the cover body 8, and concrete is filled in the formwork to construct the foundation 11 and the columnar bodies 12 to form the upper structure 10. At this time, the anchor reinforcing bars 41 and foundation reinforcing bars of the upper structure 10 are embedded in the foundation 11. In the anchor block 4, only the anchor reinforcing bars 41 are integrated with the foundation 11 of the upper structure 10 by providing the cover body 8 on the load distribution band 3. Since the anchor block 4 is not fixed to the load distribution band 3, the foundation 11 and the load distribution band 3 are separated.

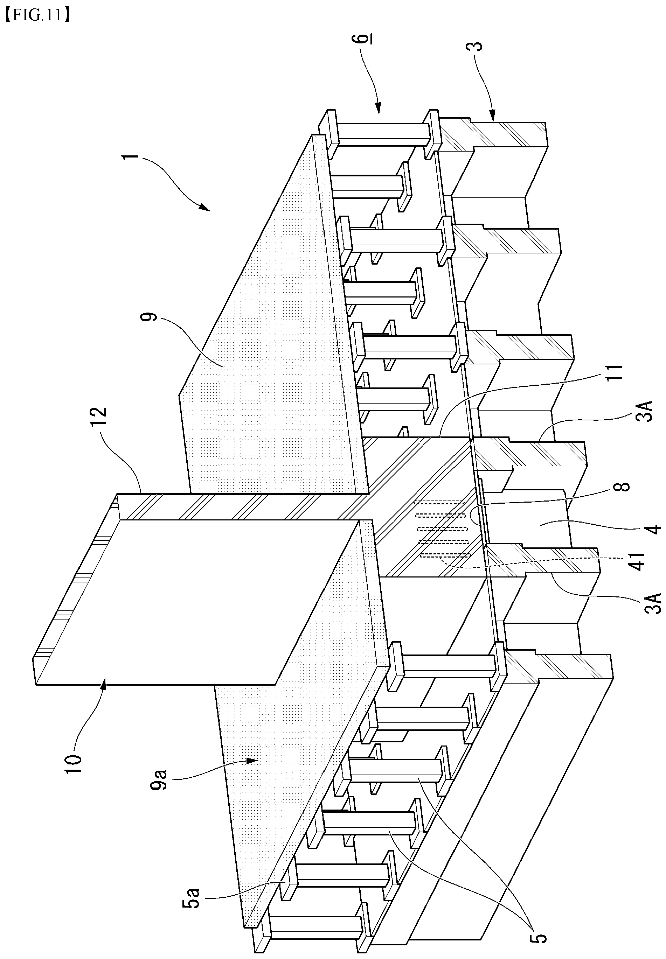

After that, as shown in FIGS. 4 and 11, facilities having appropriate infrastructure functions is installed in the flexible pit 6 formed in the upper layer of the load distribution band 3. The ballast 7 is installed at a position in accordance with the conditions such as the position and weight of the upper structure 10 in the flexible pit 6 to adjust the weight balance of the floating body structure 1.

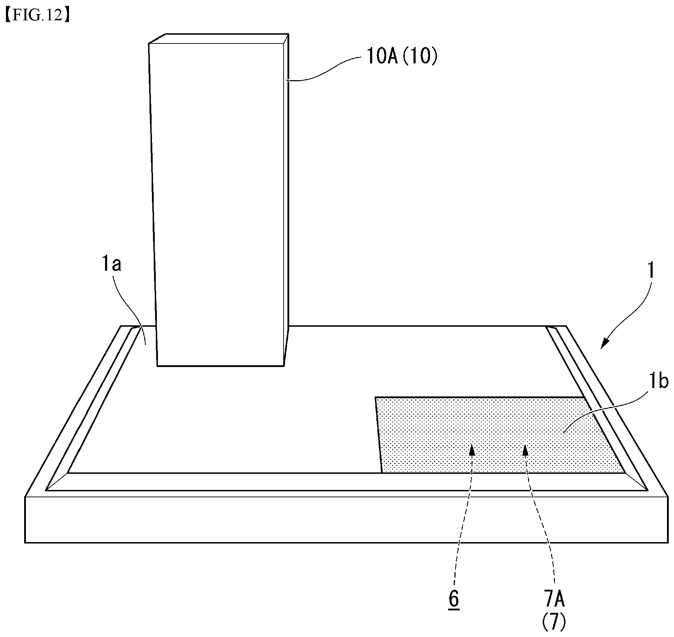

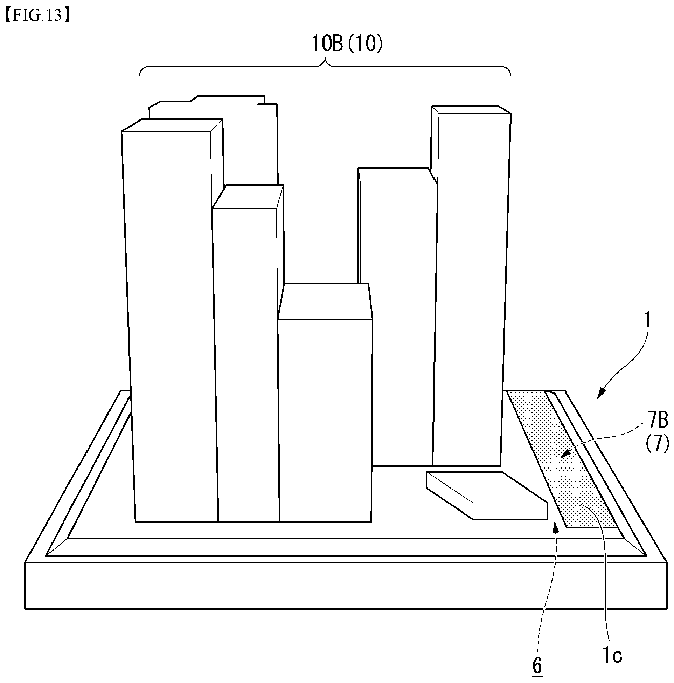

For example, in the arrangement example of the ballast 7 as shown in FIG. 12, one building 10A as the upper structure 10 is constructed at one of the first corner 1a of the floating body structure 1. The ballast 7A is arranged in a flexible pit 6 below the second corner 1b, which is the diagonal position of the first corner 1a in which the building 10A is built. In the arrangement example of the ballast 7 as shown in FIG. 13, a group of buildings 10B consisting of a plurality of buildings, which is the upper structure 10, is constructed over almost the entire area of the floating body structure 1 except for one side portion 1c of the floating body structure 1. Ballast 7B is arranged in flexible pit 6 below the one side 1c.

After that, as shown in FIG. 11, the artificial ground 9 is installed on the upper ends 5a of the plurality of support columns 5 installed on the intersections of the first supporting wall 3A and the second supporting wall 3B. The ground surface 9a of the artificial ground 9 is used for road finishing and other finishing.

Construction of the floating body structure 1 having the upper structure 10 is completed by the construction method described above.

When the existing upper structure 10 constructed on the floating body structure 1 according to the embodiment is changed or newly constructed, in the floating body structure 1, the cover body 8 configured to be fixed to the foundation 11 and the anchor blocks 4 are replaced to the new one corresponding to the newly installed upper structure 10. The floating body structure 1 can continue to use the floating body 2, the load distribution band 3, and the support columns 5 as they are.

The action of the floating body structure 1 in the embodiment will be described in detail based on the drawings.

As shown in FIGS. 2 and 4, in the floating body structure 1 according to the present embodiment, since the load distribution bands 3 are arranged in the grating wall shape, the weight of the upper structure 10 is capable of being distributed over the entire floating body 2. The floating body structure 1 easily transmits the load from the upper structure 10 to the partition walls inside the floating body 2 via the load distribution bands 3.

In the floating body structure 1 according to the embodiment, the anchor blocks 4 are provided in a state that only the anchor reinforcing bars 41 are integrated with the foundation 11 of the upper structure 10, and the anchor blocks 4 is restricted to move upward. A foundation 11 of the upper structure 10 has a structure in contact with the upper end of the load distribution band 3. Therefore, the floating body structure 1 is capable of resisting to the overturning pull-out force of the upper structure 10 by the anchor blocks 4, and preventing the upper structure 10 from overturning.

The floating body structure 1 according to the present embodiment is provided with a configuration in which the anchor blocks 4 are easily attached and detached at arbitrary positions with respect to the load distribution bands 3 arranged in the grating wall form without disassembling the load distribution bands 3. Therefore, when the upper structure 10 of the floating body structure 1 is changed or moved, it is not necessary to newly design or construct the floating body 2. The floating body structure 1 is capable of increasing the degree of freedom in constructing the upper structure 10 supported from below by the floating body 2.

In the floating body structure 1 according to the present embodiment, the protrusions 31 that expand in the width direction of each of the support walls 3A and 3B are formed on the upper part of the wall of the load distribution bands 3, and the upward engaging surface 42a of the anchor block 4 locked with the engagement lower surfaces 31a of the protrusions 31 is formed in the anchor blocks 4. Therefore, the upward engaging surface 42a of the anchor block 4 contacts and locked with the engaging lower surface 31a of the protrusion 31 of the load distribution band 3 so that the upper structure 10 is capable of being reliably resisted to the overturning pull-out force of the upper structure 10, and the overturning of the upper structure 10 is more reliably prevented.

In the floating body structure 1 according to the embodiment, the foundation 11 of the upper structure 10 and the anchor blocks 4 are connected by only the anchor reinforcing bars 41 of the anchor blocks 4 by closing the opening region 32 of the load distribution band 3 with the cover body 8, and the foundation 11 of the upper structure 10 and the anchor blocks 4 are separated from each other via the cover body 8.

In the floating body structure 1 according to the embodiment, when the new upper structure 10 and their foundation 11 are constructed, it is capable of being constructed simply by replacing only the cover body 8 and the anchor block 4, and the floating body 2 and the load distribution band 3 are capable of being continued to use.

In the floating body structure 1 according to the embodiment, since the opening region 32 is closed by the cover body 8, a foothold is secured by the cover body 8 during maintenance of the flexible pit 6 or the like.

The floating body structure 1 according to the embodiment is capable of arranging the ballast 7 in the flexible pit 6 such that the weight and position of the ballast 7 are adjusted so as to be optimally balanced with respect to the weight and the arrangement of the upper structure 10 build on the floating body structure. Therefore, a posture of the ballast 7 is capable of stabilizing by adjusting the inclination of the floating body structure 1 by the upper structure 10. The floating body structure 1 according to the embodiment is capable of increasing the degree of freedom in constructing the upper structure 10 supported from below by the floating body 2. Therefore, the floating body structure 1 is capable of keeping their static stability and stability with respect to changes of at least one of change of the weight of each upper structure 10, the load balance between each upper structure 10, and the arrangement of each upper structure 10.

The floating body structure 1 according to the embodiment uses the flexible pit 6 in which the foundation 11 of the upper structure 10 is installed, so that facilities having infrastructure functions in the upper structure 10 are efficiently arranged.

In the floating body structure 1 according to the embodiment, since the artificial ground 9 closing the upper part of the flexible pit 6 is provided on the upper end 5a of the plurality of support columns 5, the flexible pit 6 is capable of being formed between the load distribution band 3 and the artificial ground 9.

In the floating body structure 1 according to the embodiment, the artificial ground 9 is fixed to the support columns 5 provided on the load distribution band 3. The ballast 7 for adjusting the weight of the floating body structure 1 is optionally installed in the flexible pit 6. Therefore, the floating body structure 1 is capable of keeping static stability and stability of whole of the floating body structure 1 with respect to changes of at least one of change of the weight of each upper structure 10, the load balance between each upper structure 10, and the arrangement of each upper structure 10 without disassembling the load distribution band 3.

The floating body structure 1 according to the embodiment is capable of increasing the degree of freedom in constructing the upper structure 10 supported from below by the floating body 2 without newly designing or constructing the floating body 2.

Although embodiments of the floating body structure according to the present invention have been described above, the present invention is not limited to the above described embodiments, and can be modified as appropriate without departing from the scope of the invention.

For example, the floating body structure 1 according to the embodiment has the structure that the protrusions 31 extending in the width direction of each of the support walls 3A and 3B is formed on the upper end 3a of the load distribution band 3 in order to restrict the upward movement of the anchor block 4, and the anchor block 4 has an upward locking surface 42a (locking portion) locked to the locking lower surface 31a of the protrusion 31, but the floating body structure 1 is not limited to the configuration. The floating body structure 1 may be connected to the foundation 11 of the upper structure 10 without fixing to the load distribution band 3 such that the anchor blocks 4 do not move upward.

The floating body structure 1 may also omit the cover body 8 that closes the upper part of the opening region 32 surrounded by the load distribution band 3.

In the floating body structure 1 according to the embodiment, the ballast 7 for adjusting the weight of the floating body structure 1 is installed in the flexible pit 6. However, the floating body structure is not restricted the structure providing the ballast in the flexible pit 6. For example, the ballast 7 may be provided on the artificial ground 9 or may be arranged on the side of the load distribution band 3. For example, when there is no upper structure 10 on the floating body structure 1, or when the weight of the upper structure 10 is small enough not to affect the floating body 2, the floating body structure 1 may allow to omit the installation of the ballast 7.

In the floating body structure 1 according to the embodiment, the flexible pit 6 is installed with facilities having infrastructure functions in the upper structure 10, but the usage of the flexible pit 6 is not particularly limited. A configuration in which facilities having infrastructure functions is not arranged may be adapted.

The floating body structure 1 according to this embodiment has a configuration in which the artificial ground 9 is provided on the upper ends 5a of the plurality of support columns 5 to close the upper part of the flexible pit 6. However, the artificial ground 9 may not be arranged upward whole of the load distribution band 3, and the installation of the artificial ground 9 may be omitted.

In the floating body structure 1 according to this embodiment, an exemplary example of the height of the support column 5 is 2 meters, but the height dimension of the support column 5 may be set arbitrarily.

In addition, it is possible to appropriately replace the constituent elements in the present embodiment with well-known constituent elements without departing from the scope of the present invention.

### [Reference Signs List]

1: Floating body structure
2: Floating body
3: Load distribution band
3A: First support wall
3B: Second support wall
4: Anchor block
5: Support Column
6: Flexible pit
7: Ballast
8: Cover body
9: Artificial ground
10: Upper structure
11: Foundation
31: Protrusion
31a: Locking under structure
32: Opening Region
41: Anchor reinforcing bar
42: Step portion
42a: Upward locking surface

## Claims

1. A floating body structure (1) comprising a floating body (2) configured to float on or under water, and supporting an upper structure from a lower side, the upper part structure being constructed on the floating body;
**characterized by**
a load distribution band (3) integrally provided on the floating body, and arranged in a grating wall like form;
an anchor block (4) provided in an opening region so as to be detachable and attachable in a state of restricting a movement upward, and in which an anchor reinforcement bar (41) is arranged on an upper end (4a) of the anchor block, the opening region being surrounded by the load distribution band; and
a plurality of support columns (5) installed on an intersection point of a grating of the load distribution band, and configured to form a flexible pit on an upper layer of the load distribution band,
wherein a foundation of the upper structure is installed on the load distribution band, and only the anchor reinforcement bar is integrated and fixed to the foundation with a stably fixation length in which the anchor reinforcement bar obtains predetermined strength.

2. The floating body structure according to claim 1, wherein a protrusion expanded in a width direction is formed on a wall upper portion of the load distribution band, and
a locking portion which is locked with an under surface of the protrusion is formed in the anchor block.

3. The floating body structure according to claim 1 or 2, comprising
a cover body closing an upper portion of the opening region surrounded by the load distribution band.

4. The floating body structure according to any one of claims 1 to 3, wherein
a ballast for weight adjustment is installed in the flexible pit.

5. The floating body structure according to any one of claims 1 to 4, wherein
an equipment having an infrastructure function in the upper structure is installed in the flexible pit.

6. The floating body structure according to any one of claims 1 to 5, wherein
an artificial ground closing an upper part of the flexible pit is provided on an upper end of the plurality of support columns.

## Patentansprüche

1. Schwimmkörperkonstruktion (1), die einen Schwimmkörper (2) aufweist, der so ausgebildet ist, dass er auf oder unter Wasser schwimmt, und der eine Oberkonstruktion von einer Unterseite her trägt, wobei die Oberkonstruktion auf dem Schwimmkörper aufgebaut ist;
**gekennzeichnet durch**
ein Lastverteilungsband (3), das einstückig am Schwimmkörper ausgebildet und in Form einer Gitterwand angeordnet ist;
ein Ankerblock (4), der in einem Öffnungsbereich so vorgesehen ist, dass er in einem Zustand, in dem eine Aufwärtsbewegung eingeschränkt ist, abnehmbar und anbringbar ist, und bei dem an einem oberen Ende (4a) des Ankerblocks ein Ankerbewehrungsstab (41) angeordnet ist, wobei der Öffnungsbereich von dem Lastverteilungsband umgeben ist; und
eine Vielzahl von Stützsäulen (5), die an einem Schnittpunkt eines Gitters des Lastverteilungsbandes installiert sind und so ausgebildet sind, dass sie auf einer oberen Schicht des Lastverteilungsbandes eine flexible Vertiefung bilden, wobei ein Fundament der Oberkonstruktion auf dem Lastverteilungsband installiert ist und lediglich der Ankerbewehrungsstab integriert und mit einer stabilen Fixierungslänge am Fundament fixiert wird, bei welcher der Ankerbewehrungsstab eine vorbestimmte Festigkeit erreicht.

2. Schwimmkörperkonstruktion nach Anspruch 1, wobei an einem oberen Wandabschnitt des Lastverteilungsbandes ein in Breitenrichtung erweiterter Vorsprung ausgebildet ist, und
ein Verriegelungsabschnitt, der mit einer Unterseite des Vorsprungs verriegelt ist, im Ankerblock ausgebildet ist.

3. Schwimmkörperkonstruktion nach Anspruch 1 oder 2, die aufweist:
ein Abdeckkörper, der einen oberen Abschnitt des vom Lastverteilungsband umgebenen Öffnungsbereichs verschließt.

4. Schwimmkörperkonstruktion nach einem der Ansprüche 1 bis 3, wobei
ein Ballast zur Gewichtsanpassung in der flexiblen Vertiefung installiert ist.

5. Schwimmkörperkonstruktion nach einem der Ansprüche 1 bis 4, wobei
eine Einrichtung mit einer Infrastrukturfunktion in der Oberkonstruktion in der flexiblen Vertiefung installiert ist.

6. Schwimmkörperkonstruktion nach einem der Ansprüche 1 bis 5, wobei
ein künstlicher Boden, der einen oberen Teil der flexiblen Vertiefung verschließt, an einem oberen Ende der Vielzahl von Stützsäulen vorgesehen ist.

## Revendications

1. Structure (1) de corps flottant comprenant un corps flottant (2) configuré pour flotter sur ou sous l'eau, et supportant une structure supérieure par un côté inférieur, la structure de partie supérieure étant construite sur le corps flottant ;
**caractérisée par**
une bande (3) de distribution de charge prévue intégralement sur le corps flottant, et agencée sous forme de paroi en grille ;
un bloc (4) d'ancrage prévu dans une région d'ouverture de manière à pouvoir être détaché et attaché dans un état de restriction d'un mouvement vers le haut, et dans lequel une barre (41) de renfort d'ancrage est agencée sur une extrémité supérieure (4a) du bloc d'ancrage, la région d'ouverture étant entourée par la bande de distribution de charge ; et
une pluralité de colonnes (5) de support installées sur un point d'intersection d'une grille de la bande de distribution de charge, et configurées pour former une fosse flexible sur une couche supérieure de la bande de distribution de charge,
dans lequel une fondation de la structure supérieure est installée sur la bande de distribution de charge, et seule la barre de renfort d'ancrage est intégrée et fixée à la fondation avec une longueur de fixation stable dans laquelle la barre de renfort d'ancrage obtient une résistance prédéterminée.

2. Structure de corps flottant selon la revendication 1, dans laquelle une saillie déployée dans une direction de largeur est formée sur une partie supérieure de paroi de la bande de distribution de charge, et
une partie de verrouillage qui est verrouillée avec une surface inférieure de la saillie est formée dans le bloc d'ancrage.

3. Structure de corps flottant selon la revendication 1 ou 2, comprenant
un corps de couvercle fermant une partie supérieure de la région d'ouverture entourée par la bande de distribution de charge.

4. Structure de corps flottant selon l'une quelconque des revendications 1 à 3, dans laquelle
un lest pour un ajustement de poids est installé dans la fosse flexible.

5. Structure de corps flottant selon l'une quelconque des revendications 1 à 4, dans laquelle
un équipement présentant une fonction d'infrastructure dans la structure supérieure est installé dans la fosse flexible.

6. Structure de corps flottant selon l'une quelconque des revendications 1 à 5, dans laquelle
un sol artificiel fermant une partie supérieure de la fosse flexible est prévu sur une extrémité supérieure de la pluralité de colonnes de support.
